# EUROPEAN PATENT APPLICATION

(11) **EP 1 970 404 A1**
(43) Date of publication of application: **17.09.2008**
(21) Application number: 06843165.9
(22) Date of filing: 25.12.2006
(51) Int. Cl.: C08L 9/00, B60C 1/00, B60C 15/06

(54) **RUBBER COMPOSITION FOR CHAFER**

(30) Priority: 06.01.2006 JP 2006001702
(71) Applicant: SUMITOMO RUBBER INDUSTRIES, LTD., Kobe-shi, Hyogo 651-0072 (JP); Ube Industries, Ltd., Ube-shi, Yamaguchi-ken 755-8633 (JP)
(72) Inventor: OTSUKI, Hirotoshi, Kobe-shi, Hyogo 6510072 (JP); WADA, Takashi, Ichihara-shi, Chiba 2900045 (JP)
(74) Representative: Manitz, Finsterwald & Partner GbR
(86) International application number: PCT/JP2006/325761
(87) International publication number: WO 2007/077786

(57) **Abstract**

There is provided a rubber composition for a chafer, enabling generation of crack in a chafer at mounting or dismounting a rim to be suppressed as well as improving durability of a bead part by improving hardness and elongation at break. Namely, the present invention provides a rubber composition for a chafer, which comprises a rubber component comprising a butadiene rubber in which syndiotactic-1,2-polybutadiene having an average primary particle diameter of not more than 100 nm is dispersed, and has a JIS-A harness of 75 to 85 and elongation at break in a tensile test of not less than 180 %.

## Description

### TECHNICAL FIELD

The present invention relates to a rubber composition for a chafer.

### BACKGROUND ART

Excellent durability in particular is regarded as important in a tire for heavy load of an autotruck, a bus, etc, and it is necessary to enhance durability of a belt part (breaker part) composing a tire and a bead part being in contact with a rim among tire parts. Since the bead part is particularly required to have sufficient durability, a chafer is arranged as a hard rubber portion between the rim and the bead part for the purpose of suppressing distortion of the bead part.

In order to improve hardness of a chafer, it has been known to compound carbon black as a reinforcing filler in a rubber composition for a chafer, however, sufficient hardness and elongation at break required for a chafer could not be obtained.

JP-A-2004-106796 discloses a rubber composition for a tire compounded with a butadiene rubber in which syndiotactic-1,2-polybutadiene is dispersed. However, since an average primary particle diameter of syndiotactic-1,2-polybutadiene dispersed in the butadiene rubber is large and is not adequately dispersed, hardness and elongation at break of the rubber composition is not sufficient.

### DISCLOSURE OF INVENTION

An object of the present invention is to provide a rubber composition for a chafer, enabling generation of crack in a chafer at mounting or dismounting a rim to be suppressed as well as improving durability in a bead part by sufficiently improving hardness and elongation at break.

The present invention relates to a rubber composition for a chafer which comprises a rubber component containing a butadiene rubber in which syndiotactic-1,2-polybutadiene having an average primary particle diameter of not more than 100 nm is dispersed, and has a JIS-A hardness of 75 to 85 and elongation at break of not less the 180 % measured in a tensile test.

It is preferable that the rubber composition for a chafer comprises not less than 30 % by weight of a natural rubber in the rubber component.

The present invention also relates to a tire having a chafer, which comprises the above described rubber composition for a chafer.

### BEST MODE FOR CARRYING OUT THE INVENTION

The rubber composition for a chafer of the present invention comprises a rubber component, and the rubber component contains a butadiene rubber (SPB-containing BR) in which syndiotactic-1,2-polybutadiene is dispersed.

The rubber composition for a chafer of the present invention contains a SPB-containing BR having an average primary particle diameter of not more than 100 nm as the rubber component, thereby enabling elongation at rubber crack to be kept while high hardness required for a chafer is further increased.

As for the SPB-containing BR, syndiotactic-1,2-polybutadiene (SPB) is sufficiently finely dispersed in the BR which is to be a matrix, and an average primary particle diameter of SPB contained in the BR is extremely small.

In the SPB-containing BR, the average primary particle diameter of SPB contained in the BR is not more than 100 nm, preferably not more than 80 nm, more preferably not more than 50 nm. When the average primary particle diameter of SPB is more than 100 nm, SPB is not sufficiently dispersed in the matrix, and sufficient hardness is not obtained in a chafer comprising the rubber composition of the present invention, thus, durability of a bead is inferior. The average primary particle diameter of SPB contained in the BR is measured as an average value of absolute maximum length obtained by an image analysis of pictures of a transmission electron microscope.

Since the rubber composition of the present invention is used on a chafer, it is characterized in that a content of BR is extremely large as compared with other parts.

The content of SPB in the SPB-containing BR is not less than 8 % by weight, preferably not less than 10 % by weight. When the content is less than 8 % by weight, it is difficult to obtain a JIS-A hardness of not less than 75, and sufficient durability of a bead cannot be obtained. The content of SPB in the SPB-containing BR is not more than 20 % by weight, preferably not more than 16 % by weight. When the content is more than 20 % by weight, it is difficult to obtain elongation at break of not less than 180 %, and cracking at a tip of a chafer in a bead part easily occurs at mounting or dismounting a tire on or from a rim. The content of SPB in the SPB-containing BR is indicated by an amount of an insoluble matter in a boiling n-hexane.

SPB in the SPB-containing BR is preferably a crystal in order to maintain high hardness within a temperature range at using a tire.

A process for preparing SPB-containing BR satisfying the above conditions is not particularly limited, and the SPB-containing BR can be prepared by a preparation process disclosed in JP-A-2005-247899.

In a rubber composition for a chafer, a content of the SPB-containing BR in the rubber component is preferably not less than 40 % by weight, more preferably not less than 50 % by weight. When the content is less than 40 % by weight, it is difficult to obtain a JIS-A hardness of not less than 75, and there is a tendency that sufficient durability of a bead cannot be obtained. The content of the SPB-containing BR in the rubber component is preferably not more than 70 % by weight, more preferably not more than 65 % by weight. When the content is more than 70 % by weight, it is difficult to obtain elongation at break of not less than 180 %, and there is a tendency that crack at a tip of a chafer in a bead part easily occurs at mounting or dismounting a tire on or from a rim.

It is preferable that the rubber composition for a chafer further comprises a natural rubber (NR) as a rubber component.

In the rubber composition for a chafer, the content of NR in the rubber component is preferably not less than 30 % by weight, more preferably not less than 35 % by weight. When the amount is less than 30 % by weight, it is difficult to obtain elongation at break of not less than 180 %, and there is a tendency that crack at a tip of a chafer in a bead part easily occurs at mounting or dismounting a tire on or from a rim. The content of NR is preferably not more than 60 % by weight, more preferably not more than 50 % by weight. When the content is more than 60 % by weight, it is difficult to obtain a JIS-A hardness of not less than 75, and there is a tendency that sufficient durability of a bead cannot be obtained.

In addition to the above-described diene rubber containing syndiotactic-1,2-polybutadiene and NR, a styrene-butadiene rubber (SBR) may be compounded together as the rubber component.

It is preferable that the rubber composition for a chafer contains carbon black as a reinforcing filler together with the rubber component.

A nitrogen adsorbing-specific surface area (N₂SA) of carbon black is preferably 70 to 150 m²/g. When N₂SA is less than 70 m²/g, it is difficult to obtain a JIS-A hardness of not less than 75, and there is a tendency that sufficient durability of a bead cannot be obtained. When N₂SA is more than 150 m²/g, it is difficult to obtain a JIS-A hardness of not more than 85, and there is a tendency that elongation at break is lowered. Examples of carbon black satisfying such a range of N₂SA values are N330 and the like.

A content of carbon black is preferably 50 to 70 parts by weight on the basis of 100 parts by weight of the rubber component. When the content is less than 50 parts by weight, there is a tendency that hardness of a rubber composition is lowered. When the content is more than 70 parts by weight, there is a tendency that elongation at break of the rubber composition is lowered.

In the rubber composition for a chafer, in addition to the above-described rubber component and carbon black, agents generally used in the rubber industries such as silica, stearic acid, an antioxidant, wax, zinc oxide, a vulcanizing agent such as sulfur and a vulcanization accelerator can be compounded.

A content of a vulcanizing agent is preferably not less than 1 part by weight, and a content of a vulcanization accelerator is preferably not less than 1 part by weight. The total content of the vulcanizing agent and the vulcanization accelerator is preferably 2.5 to 4.5 parts by weight. When the total content of the vulcanizing agent and the vulcanization accelerator is less than 2.5 parts by weight, there is a tendency that property of low heat generation is impaired. When more than 4.5 parts by weight, there is a tendency that it is difficult to obtain elongation at break of not less than 180 %.

In the above contents of each component, in order to solve the problem of the present invention, it is the most preferable that a content of the SPB-containing BR in the rubber component is 40 to 70 % by weight, a content of carbon black is 50 to 70 parts by weight on the basis of 100 parts by weight of the rubber component, a content of the vulcanizing agent is not less than 1 part by weight, a content of the vulcanization accelerator is not less than 1 part by weight, and the total content of the vulcanizing agent and the vulcanization accelerator is 2.5 to 4.5 parts by weight.

A vulcanization temperature in preparation of the rubber composition for a chafer is preferably 145 to 155°C. When the vulcanization temperature is less than 145°C, the vulcanization time becomes excessively long, and there is a tendency that productivity is lowered. When the vulcanization temperature is more than 155°C, it is difficult to obtain elongation at break of not less than 180 %, and there is a tendency that crack at a tip of a chafer in a bead part easily occurs at mounting or dismounting a tire on or from a rim.

JIS-A hardness of the rubber composition for a chafer of the present invention is not less than 75, preferably not less than 78. When the JIS-A hardness of the rubber composition is less than 75, sufficient durability of a bead cannot be obtained. The JIS-A hardness of the rubber composition for a chafer is not more than 85, preferably not more than 83. When the JIS-A hardness of the rubber composition is more than 85, elongation of the rubber composition is lowered. The hardness is measured at a temperature of 23°C by a hardness meter according to JIS K6253.

Elongation at break of the rubber composition for a chafer in a tensile test is not less than 180 %, preferably not less than 220 %, more preferably not less than 250 %. When the elongation at break is less than 180 %, there is a tendency that crack at a tip of a chafer in a bead part easily occurs at mounting or dismounting a tire on or from a rim. The elongation at break of the rubber composition for a chafer is preferably not more than 350 %, more preferably not more than 300 %. When the elongation at break is more than 350 %, it is difficult to obtain a JIS-A hardness of not less than 75, and there is a tendency that sufficient durability of a bead cannot be obtained. Measurement of the elongation at break is carried out according to the tensile test of JIS K6251, and a measuring temperature is 23°C.

The rubber composition for a chafer of the present invention is favorably used for a chafer of a tire. It is particularly preferable to use for a tire for heavy load of an autotruck, a bus, etc.

### EXAMPLES

The present invention is specifically explained based on Examples, but the present invention is not limited only thereto.

Various compounding agents used in the present invention are shown in the following.
NR: TSR20
BR1 (VCR412): VCR412 (BR having dispersed syndiotactic-1,2-polybutadiene crystal, an amount of syndiotactic-1,2-polybutadiene: 12 % by weight, an average primary particle diameter of syndiotactic-1,2-polybutadiene crystal: 250 nm) available from Ube Industries, Ltd.
BR2 (prototype): Prototype (BR having dispersed syndiotactic-1,2-polybutadiene crystal, an amount of syndiotactic-1,2-polybutadiene: 12 % by weight, an average primary particle diameter of syndiotactic-1,2-polybutadiene crystal: 43 nm) available from Ube Industries, Ltd.
BR3 (prototype): Prototype (BR having dispersed syndiotactic-1,2-polybutadiene crystal, an amount of syndiotactic-1,2-polybutadiene: 12 % by weight, an average primary particle diameter of syndiotactic-1,2-polybutadiene crystal: 90 nm) available from Ube Industries, Ltd.
Carbon black 1: N330 (N₂SA: 82 m²/g) available from Mitsubishi Chemical Corporation
Carbon black 2: N550 (N₂SA: 42 m²/g) available from Tokai Carbon Co., Ltd.
Zinc oxide: available from Mitsui Mining & Smelting Co., Ltd.
Stearic acid: available from NOF Corporation
Antioxidant: 6C available from Flexsys Co.
Wax: OZOACE wax available from NIPPON SEIRO Co., Ltd.
Sulfur powder: available from Tsurumi Chemical Industry Co., Ltd.
Vulcanization accelerator: TBBS available from Seiko Chemical Co., Ltd.

Average primary particle diameters of VCR412 and VCR prototypes were measured as average values of absolute maximum lengths obtained by an image analysis of pictures of a transmission electron microscope.

Nitrogen adsorbing-specific surface areas (N₂SA) of carbon black N330 and carbon black N550 were measured according to a method of obtaining a specific surface area by a nitrogen adsorption method of JIS K 6217-2.

### (Process for preparing BR2)

A 2L stainless steel aging vessel equipped with a stirrer and maintained at 20°C was charged with 12.5L per hour of a mixture (water content: 2.09 mmol/L) (containing 20 mg/L of carbon disulfide) comprising 32 % by weight of 1,3-butadiene and 68 % by weight of C4 distillate containing cis-2-butene as the main component, which was dissolved in a specific amount of water, while supplying diethylaluminum chloride (10 % by weight in n-hexane, 3.13 mmol/L) , to adjust a molar ratio of diethylaluminum chloride/water in the solution in this reaction vessel to be 1.5. The obtained aged solution was supplied in a 5L stainless steel cis polymerization vessel equipped with a stirrer and maintained at 40°C. To this cis polymerization vessel were supplied cobalt octoate (0.0117 mmol/L of cobalt octoate, n-hexane solution) and 1,2-butadiene (8.2 mmol/L of 1,2-butadiene, 1.535 mol/L of n-hexane solution) as a molecular weight adjuster. The obtained cis polymerization solution was supplied to a 5L stainless steel 1,2 polymerization vessel equipped with a ribbon-shaped stirrer and continuously polymerized at 35°C for 10 hours. To this 1,2 polymerization vessel was continuously supplied triethylaluminum (10 % by weight of n-hexane solution, 4.09 mmol/L). The obtained polymerization solution was supplied to a mixing vessel equipped with a stirrer, thereto was added 2,6-di-t-butyl-p-crezol in an amount of 1 part by weight on the basis of 100 parts by weight of a rubber, and a small amount of methanol was further added. Then, after terminating the polymerization, unreacted 1,3-butadiene and C4 distillate were distilled to be removed, and 8.3 kg of BR2 was obtained by vacuum drying at a normal temperature.

### (Process for preparing BR3)

BR3 was prepared in the same manner as the process for preparing BR2 except that C4 distillate in a mixture was contained in an amount of 58 % by weight, and an amount of cyclohexane was changed to 10 % by weight.

### EXAMPLES 1 to 4 and COMPARATIVE EXAMPLES 1 to 9

### (Process for preparing a test tire)

The above-described compounding agents except for zinc oxide, sulfur and a vulcanization accelerator were kneaded by a banbury mixer under the conditions of a kneading temperature of 100°C to 150°C and a kneading time of 5 to 10 minutes according to the compounding contents in Table 1.

Then, zinc oxide, sulfur and a vulcanization accelerator were added, and the mixture was kneaded by using an open roll under the conditions of a kneading temperature at 60°C to 100°C and a kneading time of 5 to 10 minutes. The kneaded product was extrusion-molded to prepare a rubber sheet by using an extruder.

The obtained rubber sheet was molded into a shape of a chafer and laminated with other tire parts, and vulcanized for 40 minutes at 151°C, thereby, test tires of Examples 1 to 3 and Comparative Examples 1 to 9 (tire size 11R22.5) were prepared and used for the following measuring tests.

### <Hardness measurement of chafer>

A hardness of a part of a chafer of a test tire which was bending toward an inside of a tire at a joint part with a rim was measured. A hardness meter was according to JIS K 6253, and a measuring temperature was 23°C.

### <Elongation at break of chafer>

A tensile test was carried out using a rubber test piece obtained from a chafer of a test tire, and elongation at break was measured. The tensile test was carried out according to JIS K6251, and a measuring temperature was 23°C.

### <Bead durability test>

After a tread part of a test tire being in contact with a road surface was subjected to buffing until a depth of a tire groove of 4 mm was reached, the test tire was combined in a rim with the size of 8.25, and a running test was carried out for 96 hours under the conditions of an internal pressure at 800 KPa, a speed at 20 km/h and a weight of 58 kN, then another running test was carried out for 96 hours under the conditions of an internal pressure at 950 KPa, a speed at 20 km/h and a weight of 68 kN. Thereafter, a time until damage was generated on a bead under the conditions of an internal pressure at 1,000 KPa, a speed at 20 km/h and a weight of 77 kN was measured. If the time until a damage was generated on a bead was not less than 500 hours for 450 hours in Comparative Example 1, the time was evaluated to show improvement effects. The test was carried out at a temperature of 25°C.

Results of the above measurement tests are shown in Table 1.

**TABLE 1**

| | Ex. | | | | | Com. Ex. | | | | | | | | |
|---|---|---|---|---|---|---|---|---|---|---|---|---|---|---|
| | 1 | 2 | 3 | 4 | | 1 | 2 | 3 | 4 | 5 | 6 | 7 | 8 | 9 |
| Amounts (part by weight) | | | | | | | | | | | | | | |
| NR | 40 | 30 | 60 | 40 | | 40 | 30 | 61 | 29 | 40 | 40 | 40 | 30 | 60 |
| BR 1 (VCR412) | - | - | - | - | | 60 | 70 | - | - | - | - | - | - | - |
| BR 2 (prototype) | 60 | 70 | 40 | - | | - | - | 39 | 71 | 60 | 60 | 60 | 70 | 40 |
| BR 3 (prototype) | - | - | - | 60 | | - | - | - | - | - | - | - | - | - |
| Carbon black 1 | 70 | 65 | 70 | 70 | | 70 | 70 | 70 | 50 | 49 | 71 | - | 70 | 68 |
| Carbon black 2 | - | - | - | - | | - | - | - | - | - | - | 50 | - | - |
| Stearic acid | 2 | 2 | 2 | 2 | | 2 | 2 | 2 | 2 | 2 | 2 | 2 | 2 | 2 |
| Antioxidant | 3 | 3 | 3 | 3 | | 3 | 3 | 3 | 3 | 3 | 3 | 3 | 3 | 3 |
| Wax | 1.5 | 1.5 | 1.5 | 1.5 | | 1.5 | 1.5 | 1.5 | 1.5 | 1.5 | 1.5 | 1.5 | 1.5 | 1.5 |
| Zinc oxide | 3 | 3 | 3 | 3 | | 3 | 3 | 3 | 3 | 3 | 3 | 3 | 3 | 3 |
| Sulfur powder | 1.5 | 1.5 | 1.5 | 1.5 | | 1.5 | 1.5 | 1.5 | 1.5 | 1.5 | 1.5 | 1.5 | 1.5 | 1.5 |
| Vulcanization accelerator | 2.5 | 2.5 | 2.5 | 2.5 | | 2.5 | 2.5 | 2.5 | 2.5 | 2.5 | 2.5 | 2.5 | 2.5 | 2.5 |

| Evaluation results | | | | | | | | | | | | | | |
|---|---|---|---|---|---|---|---|---|---|---|---|---|---|---|
| Hardness of rubber chafer | 80 | 85 | 75 | 77 | | 74 | 78 | 74 | 77 | 73 | 81 | 75 | 86 | 74 |
| Elongation at break of chafer (%) | 200 | 180 | 270 | 180 | | 210 | 170 | 250 | 160 | 240 | 170 | 150 | 160 | 250 |
| Time of generating damage on bead (h) | 530 | 580 | 500 | 520 | | 450 | 510 | 460 | 540 | 450 | 540 | 500 | 600 | 460 |

### INDUSTRIAL APPLICABILITY

According to the present invention, by compounding a butadiene rubber comprising syndiotactic-1,2-polybutadiene having a small average primary particle diameter to a rubber composition for a chafer to improve hardness and elongation at break of the rubber composition, generation of crack in a chafer at mounting or dismounting a rim can be suppressed and durability of a beat part is improved.

## Claims

1. A rubber composition for a chafer, which comprises a rubber component comprising a butadiene rubber in which syndiotactic-1,2-polybutadiene having an average primary particle diameter of not more than 100 nm is dispersed, and
has a JIS-A harness of 75 to 85 and elongation at break in a tensile test of not less than 180 %.

2. The rubber composition for a chafer of Claim 1, further comprising a natural rubber in an amount of not less than 30 % by weight in said rubber component.

3. A tire having a chafer, which comprises the rubber composition for a chafer of Claim 1 or 2.
